# EUROPEAN PATENT SPECIFICATION

(11) **EP 1 084 373 B1**
(45) Date of publication and mention of the grant of the patent: **06.11.2002**
(21) Application number: 99955317.5
(22) Date of filing: 01.06.1999
(51) Int. Cl.: F24J 3/08, F28D 20/00

(54) **EARTH HEAT EXCHANGE SYSTEM**
UNTERIRDISCHES WÄRMETAUCHSYSTEM
SYSTEME SOUTERRAIN D'ECHANGE DE CHALEUR

(30) Priority: 01.06.1998 US 87705; 26.01.1999 US 237754
(43) Date of publication of application: 21.03.2001
(73) Proprietor: Enlink Geoenergy Services, Inc., Houston, TX 77084 (US)
(72) Inventor: AMERMAN, Thomas Robert, Houston, TX 77094 (US); JOHNSON, Howard, Edwin, Jr., Kennesaw, GA 30144 (US)
(74) Representative: Lucas, Brian Ronald
(86) International application number: GB9901521
(87) International publication number: WO99063282

(56) References cited:
- WO-A-99/63282
- US-A- 4 042 012
- US-A- 4 050 509
- US-A- 5 623 986

## Description

The present invention relates to a method of constructing a heat exchanger in a wellbore and to a filler material for use in such a method.

The prior art discloses the use of a common grout, typically a bentonite clay mixture, for use as a thermally conductive material between a pipe loop of an underground heat exchange system and the interior of a hole in which the loop is positioned.

The cost for the installation of certain prior art vertical ground source heat loops can account for nearly half of the total cost incurred in the installation of a geothermal heat pump system. In certain aspects, the heat loop installation consists of drilling a vertical well, placing a thermoplastic pipe "loop" in the wellbore, and filling the annular space between the loop and the well wall with a thermally conductive material. Several problems can arise in such methods: loop "insertion" difficulties caused by loop buoyancy; thermal conductivity and installation difficulties of borehole backfill materials; and environmental concerns.

Many conductive high solids and cementitious "grouts" have been developed to fill the annular space between the heat loop and the wellbore and which include a mixture of water and a relatively conductive solid such as silica sand or fly ash. In order to transport the heavy solids, a viscosity enhancer such a bentonite clay is added. Also, friction reducers and "super-plasticizers", like sulfonated naphthalene, are added to make the slurry pumpable. Although these grouts seem to work well in testing, there is great resistance from the field installers. The mixture can be expensive to handle, difficult to mix, even more difficult to pump, and extremely rough on equipment because of the abrasion. In addition, placing of the material in the borehole is difficult to control and monitor. If grouting is attempted from the surface, "bridging" can occur resulting in a partially filled hole. If grouting from the bottom of the hole, "channelling" can occur, again resulting in a partially grouted hole. When the water subsides in the borehole, this leaves air spaces, thus insulating the loop and reducing the efficiency of the system. An additional disadvantage is that the voids from channelling as well as the interstitial spacing between the individual sand (or other solid particles) create permeability. Permeability that creates a vertical communication path by which the ground water system could be contaminated by surface spills is an environmental concern.

The prior art cementitious grouts, developed to overcome the permeability objection, have some unique problems of their own. In addition to all of the handling, mixing, pumping, abrasion, and conductivity problems of the High Solids Thermally Conductive Grouts, the "heat of hydration" generated when cement cures, causes grout to "shrink" away from the polyethylene pipe. As heat is generated, the polyethylene pipe, having a very high coefficient of expansion expands. Once the cement cures and cools, the polyethylene contracts and actually pulls away from the grout. Although the permeability of the cured grout itself is very low, a flow path may now exist between the polyethylene pipe and the grout - again insulating the loop and threatening the environment. Because of its inherent structure, polyethylene is a very high molecular weight wax or paraffin, and does not bond well with anything, even under laboratory controlled conditions. Attempts to control grout shrinkage and cement to polyethylene bonding in the field were proven unsuccessful.

Drilling "polymers" have existed for years. They have been used in the oil well drilling industry as an alternative to bentonite clays to provide solids transport, solids suspension, friction reduction, and displacement efficiency.

US-A-4 042 012 discloses an underground heat exchanger constructed in a relatively wide shallow pit. The pit is backfilled with soil throughout which a water-soaked gel has been dispersed in order to improve the efficiency of the heat exchanger. However, in backfilling the hole of US-A-4 042 012 the aforementioned problems are not encountered to any significant degree.

The present invention is derived from WO-A-9710480 disclosing a method of constructing an underground heat exchanger, which method comprises the steps of:
(1) constructing a wellbore;
(2) lowering a heat loop into said wellbore; and
(3) backfilling the space between said heat loop and said wellbore with a filler material comprising a thermally conductive solid and water, which filler material is liable to bridging and channelling in said space. By the step of adding a gel to said filler material said bridging and channelling is inhibited.

Further features are set out in Claims 2 to 5.

The thermally conductive solid may be, for example but not limited to: sand; powdered metal, e.g. aluminum, zinc, aluminum alloys, zinc alloys, iron, steel; and/or crushed granite. Additionally or alternatively the gel/water/solids mixture also includes a biocide and/or a cross-linking agent when the gel is a polymer.

Additionally or alternatively the gel is a polymer, e.g. but not limited to xanthan gum, guar gum or polyacrylamide polymers; and in certain particular embodiments the resulting filler material does not crack when it shrinks and/or is rehydrateable. In other aspects the polymer is a rehydrateable polymer. Suitable gel materials include, but are not limited to xanthan biopolymers; commercially available Xanvis™ material from Kelco Oil Field Group; Kelzan™ material from Kelco Oil Field Group; ASP 700 polymer from Exxon-Nalco Co.; known drilling fluid polymers that form a gel with water; and synthetic polymers with suitable gelling characteristics; including, but not limited to, polyacrylamide polymers.

Although the drilling of the hole may be relatively easy, certain problems may be encountered in inserting the loop. In most application, the "loop" consists of a relatively lightweight thermoplastic pipe. One material of choice is polyethylene, with a specific gravity of approximately 955 kg/m³ (0.955 gms/cc³) i.e. lighter than water. This pipe material also has relatively poor stiffness. As a driller attempts to push the pipe down into a mud filled well, the natural buoyancy of the pipe resists these efforts. Since the pipe has poor longitudinal stiffness, the pipe tends to bend or curl inside the well, creating additional frictional drag against the well wall until the pipe can be pushed no deeper. Even when the pipe is filled with water, the loop still maintains considerable buoyancy because the drilled hole is filled with dense drilling mud. In soft geological formations, the driller must mix heavy drilling mud in order to transport drilled cuttings and to stabilize the hole. In most cases, bentonite clay is added to the drill fluid to reduce friction, prevent loss of circulation, and suspend solids. However, the result is residual heavy drilling fluid in the well, creating a very dense slurry of clay, sand, rock, etc. - with resulting high buoyancy and low surface tension. In order to overcome the buoyancy problems, the driller usually attaches a heavy steel bar to the leading end of the heat loop and "pulls" the loop to the bottom of the well. Once the loop hits bottom, the driller 1) remotely secure the loop in the hole to prevent it from floating up, 2) remotely detaches the steel bar from the loop, 3) and recovers the bar from the well, usually by a cable winch. The considerable efforts made to overcome buoyancy of the loop caused by the density of the drill fluid are time consuming, expensive, and hazardous to the integrity of the loop.

Preferably, said method further comprises the step of attaching a bottom member to said heart loop, which bottom member comprises a body, a first bore through the body extending from a first opening of the body to a second opening of the body, the first opening and the second opening each sized and configured for receipt therein of a respective heat loop pipe, a second bore having at least one opening on the body, the second bore sized and configured for mounting said body on an end of coil tubing.

Further features are set out in Claims 7 to 10.

In use, the bottom member has two heat loop pipes attached thereto and a grouting pipe which is releasably attached thereto. The bottom member may be of sufficient mass itself or it may have weights connected thereto so it will easily move down the wellbore. In another embodiment an integral loop of pipe is used with an inlet pipe secured to one side of the loop and an outlet pipe secured to the other side of the loop.

A suitable filler material for use in a method according to the present invention, which filler material comprises a thermally conductive solid and water, which filler material is liable to bridging and channelling in said space, characterised by a gel to inhibit said bridging and channelling.

Further features are set out in Claims 12 to 15.

According to another aspect of the present invention there is provided an underground heat exchanger embedded in a filler material in accordance with claims 11-15.

For a better understanding of the present invention, reference will now be made, by way of example, to the accompanying drawings, in which:
Fig. 1 is a schematic view of a prior art underground pipe loop heat exchange system;
Fig. 2 is a schematic view of a prior art wellbore grouting system;
Fig. 3 is a schematic view of an underground pipe loop heat exchange system;
Fig. 4A is a top view of a bottom member; Fig. 4B is a side view of the bottom member of Fig. 4A;
Fig. 5A - 5C are side schematic views of a prior art grouting system;
Fig. 6 is a top schematic view of a prior art grouting system;
Fig. 7A is a top schematic view of the grouting unit of the system of Fig. 6; Fig. 7B is a side view of the grouting unit of Fig. 7A; Fig. 7C is a top view of the drilling unit of the system of Fig. 6; Fig. 7D is a side view of the drilling unit of Fig. 7C;
Fig. 8A is a front view of a pipe heat exchange loop and related items; Fig. 8B is a side view of the items of Fig. 8A;
Fig. 9A is a front view of a pipe heat exchange loop and related items for use in a method according to the present invention; Fig. 9B is a cross-section side view along line 9B-9B of Fig. 9A;
Fig. 10 is a schematic side view of a system for use in a method according to the present invention;
Fig. 11 is a front view of a system for use in a method according to the present invention;
Fig. 12 is a side cross-section view of a system for use in a method according to the present invention;
Fig. 13 is a perspective view of a system for use in a method according to the present invention;
Fig. 14A is a perspective view of a heat loop bottom member for use in a method according to the present invention; Fig. 14B is a side cross-section view; Fig. 14C is a front cross-section view, and Fig. 14D is a top view of the bottom member of Fig. 14A;
Fig. 14E is a front view of the coil tubing connector; Fig. 14F is an end view of the connector of Fig. 14E; Fig. 14G is a perspective view of a heat loop bottom member for use in a method according to the present invention;
Fig. 15A is a side cross-section view of a heat loop bottom member for use in a method according to the present invention; Fig. 15B is a front cross-section view, and Fig. 15C is a top cross-section view of the bottom member of Fig. 15A;
Fig. 16A is a side view of a heat loop installation system for use in a method according to the present invention; Fig. 16B is a top perspective view showing a top of a wellbore above which is the system of Fig. 16A;
Fig. 17 is a side view of a spool apparatus for use in a method according to the present invention; and
Fig. 18A - 18C are schematic side views illustrating steps in a method according to the present invention.

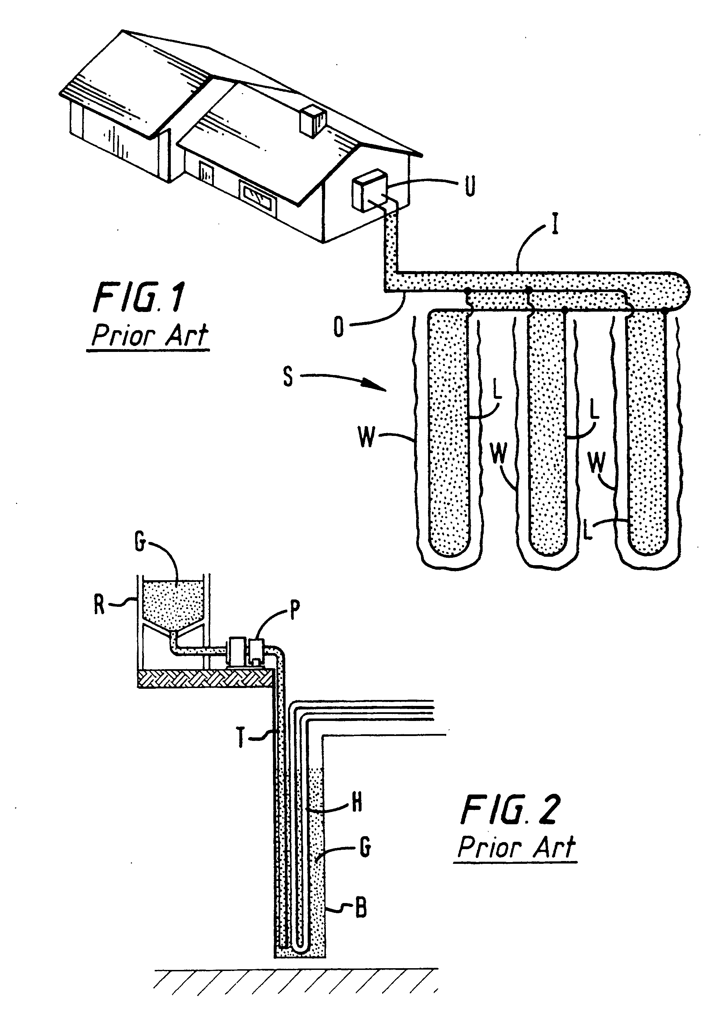

Referring now to Fig. 1, a prior art underground heat exchange pipe loop system S has a plurality of wellbores W, each e.g. about 76.2m (250 feet) deep and 0.1m to 0.11m (4 to 4.5 inches) in diameter, which are preferably, between about 3m to 4.57m (ten feet to fifteen feet) apart. Water flows from a building's processing unit U in an inlet pipe I into each inlet side of a plurality of pipe heat exchange loops L and then flows up in each outlet side of the loops L to an outlet pipe O which is in fluid communication with the processing unit U. Pipes I and O are typically about 13.71m (45 feet) long for a three loop system as shown [preferably about 3m to 4.5m (ten to fifteen feet) between each loop].

Fig. 2 illustrates a prior art system and method for grouting a wellbore such as the wellbores W in Fig. 1. After a pipe heat exchange loop H is installed in a wellbore B, a grout pipe T is inserted into the wellbore B. A grout pump P then pumps grout G from a reservoir R down the grout pipe T from which it flows into the wellbore B.

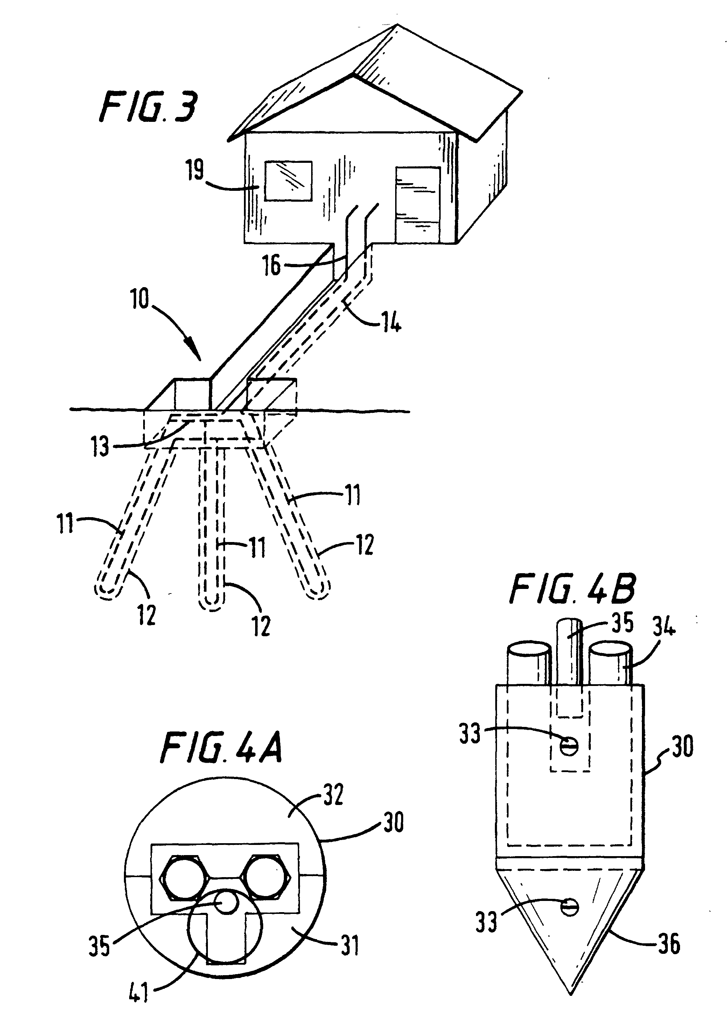

Fig. 3 shows a system 10 which has a plurality of wellbores 12; a water inlet pipe 14; and a water outlet pipe 16. The system includes a processing unit (not shown, like the unit U, Fig. 1), e.g. with pump(s), controller(s), a heat exchanger, and a compressor. The processing unit makes heated air or cooled air available to an adjacent facility or building such as a residential home 19. A manifold 13 interconnects heat loops 11 in the wellbores 12.

In one embodiment the wellbores 12 are about 0.61m to 0.91m (two to three feet) apart at the surface. The length of the pipes 14 and 16 depend on the distance of the facility from the wellbores. Both the system S (Fig. 1) and the system 10 (Fig. 3) provide about 3000kg (3 tons) of air conditioning. Typically a 76.2m (250 foot) wellbore is required for each 1000kg (ton) of operating capacity. One 3000kg (three ton) unit has three 76.2m (250 foot) wellbores each with a 152.4m (500 foot) [76.2m (250 feet) down, 76.2m (250 feet) up] heat loop.

Figs. 4A and 4B illustrate a bottom member 30 which includes two similar halves 31 and 32 which are secured together with bolts 33 to hold a loop of pipe 34. A rod 35 projecting upwardly from the bottom member 30 is sized to receive and hold a filler or grout pipe slipped loosely over the rod 35. In one aspect the grout pipe is filled with filler material or grout as the device is moved down into a wellbore. An end 36 of the bottom member 30 is pointed to facilitate its entry into and movement through the wellbore. In one aspect drilling fluid is circulating down through the pipe to facilitate lowering of the entire assembly to the bottom of a hole. In one aspect the pipe 41 fits around the rod 35 with a loose fit, allowing drilling fluid to be circulated down through the pipe 41, around the rod 35, and out into the wellbore.

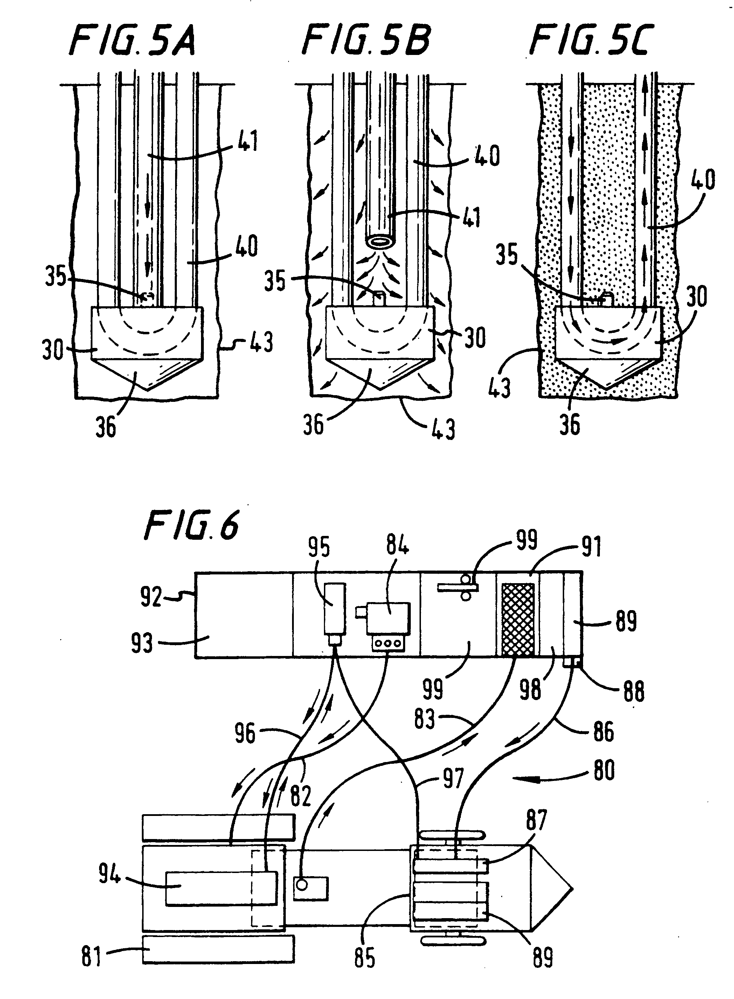

Figs. 5A - 5C illustrate one system and method. A bottom member 30 with a pipe loop 40 (heat loop) secured therein and a filler or grouting pipe 41 releasably secured thereto is moved down into a wellbore 43 (Fig. 5A). Once the bottom member 30 reaches the bottom of the wellbore 43, the pipe 41 is pulled off the rod 35 and grout is pumped down the pipe 41 and into the wellbore 43, surrounding the pipe loop 40 and the bottom member 30 (Fig. 5B). The pipe 41 is removed from the wellbore 43 and the pipe loop 40 is filled and/or grouted in place (Fig. 5C).

In one aspect the pipe 41 is filled with drilling fluid as it is moved to the bottom of a wellbore. Once the pipe 41 is released from the bottom member 30, the drilling fluid in the pipe 41 is displaced out from the pipe 41 and up into the annulus between the heat loop and the wellbore's interior as filler and/or grout is pumped down into the pipe 41. When an amount of filler and/or grout sufficient to encapsulate the pipe heat exchange loop in the wellbore (either entirely or portion(s) thereof) has been pumped into the wellbore and/or pipe, then drilling fluid is again pumped down into the pipe 41 to push all filler and/or grout out from the pipe 41 so it does not set up in the pipe 41.

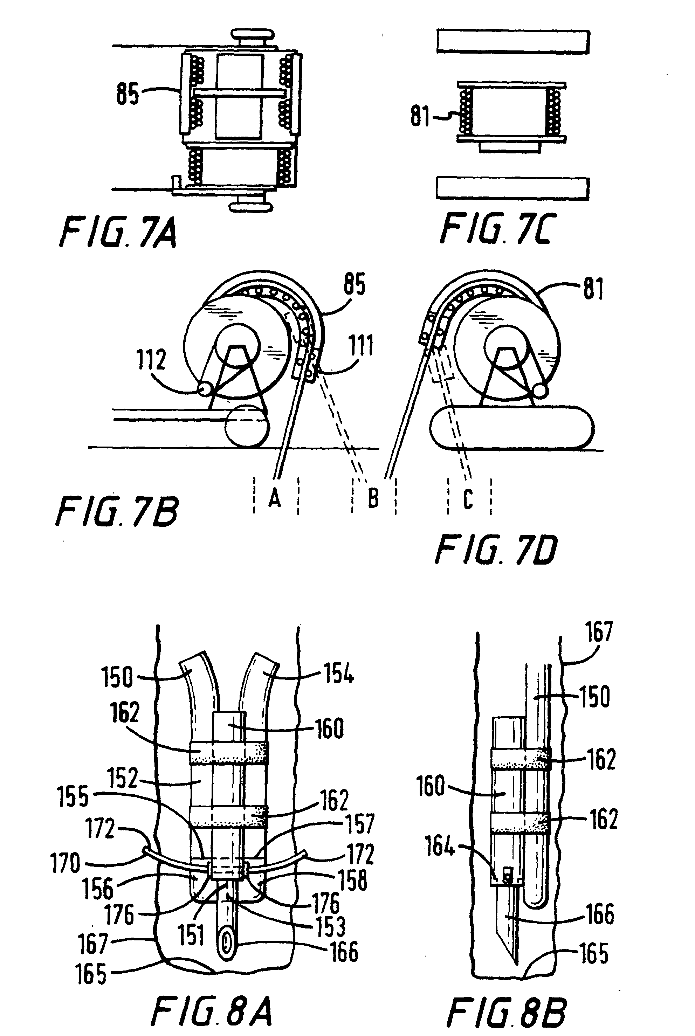

Figs. 7A - 7D illustrate the unit 85 and the drilling unit 81 of the system 80 (Fig. 6). As shown in Figs. 7B and 7D, after the drilling unit 81 has drilled a wellbore A, a filler and/or grouting assembly is introduced into the wellbore A by a drive 111 of the unit 85. Simultaneously the drilling unit 81 is moved to drill wellbore B (shown in dotted lines. Fig. 7B). Upon the completion of the drilling of wellbore B a drive 112 removes the filler and/or grouting assembly from the wellbore A and then upon completion of the filling and/or grouting of wellbore A, the drilling unit 81 is pivoted to begin drilling wellbore C (shown in dotted lines, Fig. 7D) while the unit 85 is pivoted to begin to fill and/or grout wellbore B.

Fig. 6 illustrates a drilling-filling system 80. A drilling unit 81 has flow lines 82 and 83 through which a triplex pump 84 on a trailer 92 pumps motive drilling fluid to energize a downhole drilling motor (not shown) on coil tubing 94 of the drilling unit 81. A unit 85 has a flow line 86 through which a Moyneaux (or progressive cavity) pump 88 pumps grout from a reservoir 89 into a wellbore (not shown) beneath the drilling unit 81. A shale shaker 91 is used to clean the drilling fluid used by the drilling unit 81. Drilling and tube units transport space 93 is provided for storing and transporting equipment. An hydraulic power unit 95 provides power for the drilling unit 81 via line 96 and for the unit 85 via a line 97. A mud mixing tank 98 is in communication with an active mud system and is used when new drilling fluid is blended. A desilter 99 is provided for removing very fine solids from the drilling fluid. The unit 85 includes a pipe reel 87 and a heat loop reel 89.

Figs. 8A and 8B show one embodiment of a system 150. A first hollow elbow 156 made from polyethylene with a wall thickness of about 0.003m (0.113 inches) has a side opening 151 which is fused to a side opening 153 of a second hollow elbow 158. A first polyethylene pipe 152 is fused to a top opening 155 of the first elbow 156 and a second polyethylene pipe 154 [e.g. 0.02m (three quarters of an inch) in inside diameter, 0.028m (1.1 inches) in outside diameter] is fused to a top opening 157 of the second elbow 158. Heat exchange fluid, e.g. but not limited to water, is flowable down through the first pipe 152, through the first elbow 156, through the second elbow 158, and then up through the second pipe 154, or vice versa. Pieces of tape 162 secure a piece of pipe 160 (made, e.g., of PVC). A filling and/or grouting pipe (not shown) is inserted down into the pipe 160 so that it abuts a top shoulder 164 of a pointed pipe 166 secured in the pipe 160. The pipe 166 is pushed down a wellbore 167. As the system 150 is inserted into the wellbore 167, a bendable anchor 170 with one or more arms 172 moves into the wellbore with the system 150. On one aspect the anchor is made of plastic. In one aspect such an anchor 170 has two arms 172 and is a single piece of plastic tubing or rod half an inch thick which extends through holes 174 in the pipe 160. Lock washers 176 facilitate securement of the anchor 170 in place. An upward pull on the system 150 spreads the arms 172 and forces them into the earth around the wellbore 167, thereby anchoring the system 150.

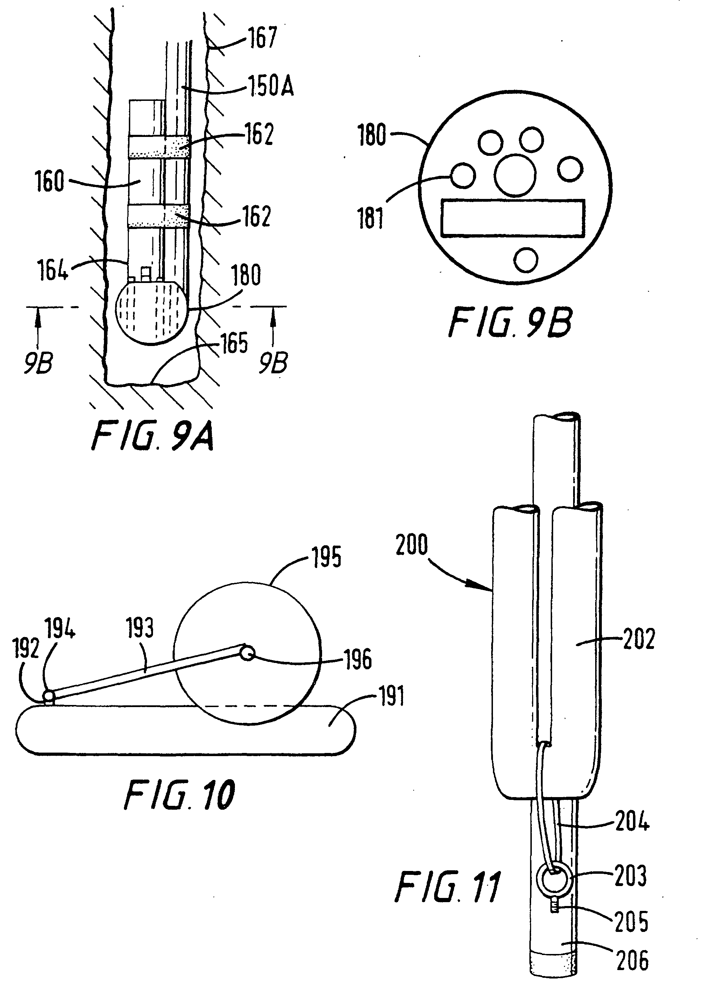

Fig. 9A shows a system 150a in accordance with the present invention, similar to the system 150 of Fig. 8B and like numerals indicate the same parts. A ball 180 which is generally spherical in shape with a flat top is secured at the ends of the pipe 166a (like the pipe 166). Optionally, the ball 180 has a series of flow channels 181 therethrough. The ball 180 facilitates passage of the system 150a through a wellbore and inhibits catching of the system on a ledge or indentation in the wellbore. It is within the scope of this invention to use any curved member or members, hollow ball, curved nose, bowl, half-bowl, or tapered member instead of the ball 180 to facilitate the movement of the system 150a through a wellbore. A filling and/or grouting pipe (e.g. coil tubing) is insertable into the pipe 160 as with the system of Fig. 8A.

Fig. 10 shows a coil tubing system 190 with a base 191 having a support 192 secured thereto. A beam 193 is pivotably mounted with a pivot member 194 to the support 192. A shaft 196 of a coil tubing reel 195 is rotatably mounted to the beam 193. The reel 195 can be raised and lowered with respect to the base 191.

Fig. 11 shows a system 200 according to the present invention with a heat exchange loop 202 like any described herein which is attached to a connector 203 by a loop or ring 204. The connector 203 is secured to a coil tubing 206, e.g. with epoxy and/or any suitable fastener, such as, but not limited to, a screw 205. The coil tubing 206 and the loop 202 (although shown partially) may be of sufficient length to extend from the bottom of a wellbore to the earth's surface.

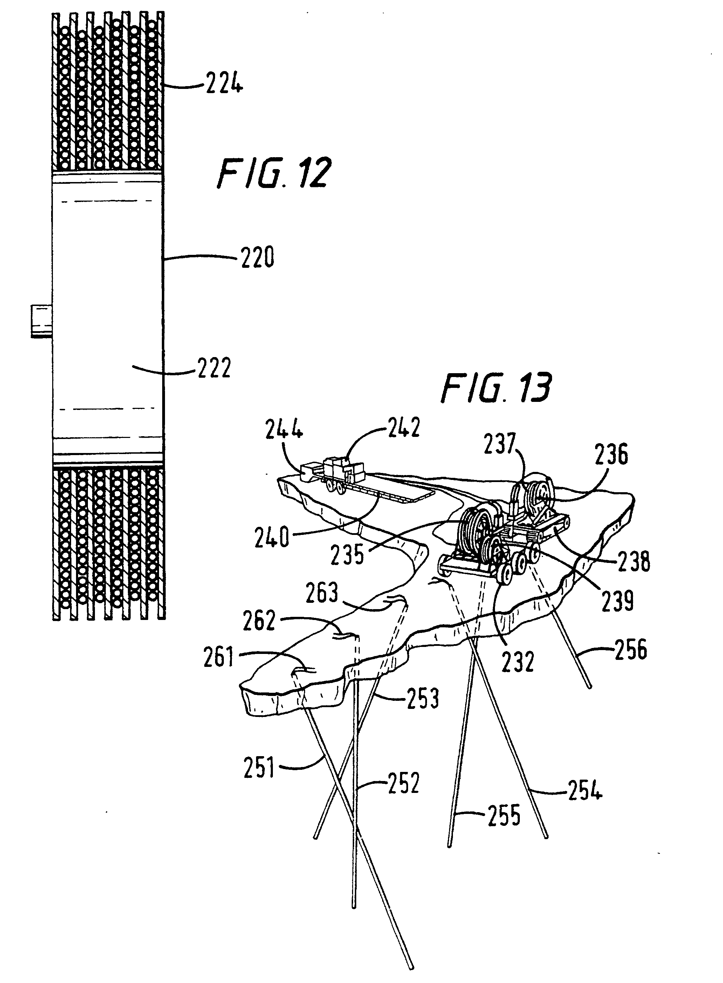

Fig. 12 shows a coil tubing reel 220 according to the present invention which has a main generally-cylindrical body 222 and a plurality of fingers 224 between which are disposed individual discrete lengths of coil tubing. When drilling multiple holes with the same coil tubing, the coil tubing may become worn or damaged. When this occurs using the reel 220 with any system disclosed herein, the worn length of tubing is simply disconnected from the drilling apparatus and another length between two other fingers is used. All the coil tubing on the reel may be of the same diameter. Alternatively, coil tubing of different diameters may be used between different pairs of fingers.

Fig. 13 shows a system 230 according to the present invention with a trailer-mounted reel 232 containing coil tubing 235 to which is attached a heat loop pipe 234 from a reel 239. The reel 239 may be on the trailer 232 or on the ground or a skid adjacent a borehole 255 into which the coiled tubing 235 is pushing the heat loop 234. A coil tubing reel 236 on a self-propelled base 238 has coiled tubing 237 thereon. A drilling apparatus, not shown, is at the end of the coil tubing 237 within a wellbore 256 being drilled in the earth. A trailer 240 (or a truck may be used) supports the associated apparatus 242 (like that in Fig. 6) and a cuttings bin 244 receives cuttings produced by the drilling. The system shown in Fig. 13 has completed a series of boreholes 251, 252, 253, and 254 (e.g., in one aspect, as previously described herein), each with a corresponding heat loop 261, 262, 263, 264 grouted in place therein with a portion extending out from the top of each borehole.

In an alternative step or steps for any method disclosed herein, instead of removing a filler and/or grout pipe, tubular or tube from a borehole as the filler and/or grout is pumped into the borehole, some or all of the pipe, etc. may be left in the borehole permanently. In such a case, one or more holes or openings may be made near the end of the pipe (or at any other desired location in the pipe, including, but not limited to, a series of spaced apart hole along the length of the pipe) to facilitate pumping of filler and/or grout into the borehole.

In one aspect filler material according to the present invention uses polymers designed to molecularly bond with water. This molecular bonding has the practical effect of increasing the viscosity of the fluid, enabling the fluid to carry heavy particles and also prevent loss of circulation. Thus the filler material is a molecularly bonded gel. Bentonite and other drilling clay additives perform the same function, but by creating a colloidal suspension, not a molecularly bonded gel. Consequently, the bentonite may eventually settle out and separate from the water and the water may eventually be lost from the borehole. However, in one aspect the molecular bond between the polymer, e.g., but not limited to xanthan gum, and the water molecule can remain indefinitely. In one aspect the polymer is chemically stabilized with a biocide.

In certain embodiments in very high concentrations, a xanthan gum/water mixture consists of at least 97% water, and the thermal conductivity is substantially the value of water. It is also nonpermeable.

As far as installation considerations are concerned, a gelled filler material according to the present invention is pumpable with less friction than pure water. Having no abrasives, there is little or no wear and tear on pumping equipment, and the material's density is very nearly that of pure water. This low specific gravity, along with high surface tension and viscosity reduces or eliminates the buoyancy of a heat loop.

A filler material according to the present invention is, in one aspect, an aqueous stabilized 3% solution of xanthan gum which is less expensive to make than many thermally conductive grouts or cementitious grouts. Pouring 0.0028m³ (three quarts) of xanthan biopolymer in a barrel [0.16m³ (42 gallons)] of water makes a 3% solution.

In certain embodiments the present invention discloses a pumpable thermally conductive filler material for emplacement in a borehole around a heat loop that extends from a point below the earth surface up to the earth surface. Any of the methods for heat loop installation disclosed herein may be used to install such a heat loop and any such method that also includes grouting (and associated apparatus) may be used with the filler material used instead of the previously-described grouts and/or filler material with grout.

Thermally conductive solids are added to any such mixture. In another particular aspect the polymer is a synthetic polyacrylamide polymer such as commercially available liquid ASP 700 from Exxon-Nalco. The polymer and water are mixed in a container and stirred together.

The thermally conductive solids are, e.g., but not limited, particles of sand, ranging in size between 30 mesh and 200 mesh. In certain preferred embodiments these ingredients are present, by weight, in the following ranges:

| | |
|---|---|
| Polymer | about 0.3% to about 5% |
| Water | about 25% to about 50% |
| Solids | about 50% to about 80% |

In one particular embodiment the polymer is present as about 1% by weight; the water as about 29% by weight and the sand as about 70% by weight. In another embodiment the polymer is present as about 0.4 % by weight; the water as about 44% by weight; and the solids (sand) as about 55% by weight. The mixture is prepared, in one aspect, by pouring the ingredients into a container and mixing them together e.g. by stirring and/or with a paddle mixer.

Certain embodiments of any of the new filler materials described above or herein may also contain a polymer cross-linking agent, e.g. any suitable commercially available cross-linking agent to cross-link the polymer molecules to enhance water holding ability. In one aspect commercially available .2% VX6338 from Exxon-Nalco is used. In certain preferred embodiments, sufficient cross-linking agent its used to completely cross-link the polymer present. In certain preferred embodiments, rehydrateable polymers such as, but not limited to, polyacrylamide polymers are used. Such polymers may not crack upon dehydration, but may shrink. It is within the scope of this invention to introduce an effective amount of water into a borehole with the filler material therein to inhibit and reduce shrinkage and, in other aspects, to introduce water on a regular basis into such a borehole to accomplish this.

Using a filler material according to the present invention produces, in certain aspects, an underground heat exchange system - e.g. any as described herein - with filler material having a thermal conductivity at or above 1.2 and in certain aspects at or above 1.4 or 1.5. With certain preferred embodiments with a filler material having a thermal conductivity of about 1.4 (or greater) an effective heat loop according to the present invention may range between 42.67m and 121.92m (140 and 400 feet) in length (in a wellbore of corresponding depth), depending on the ground temperature, its thermal conductivity, and the wellbore diameter.

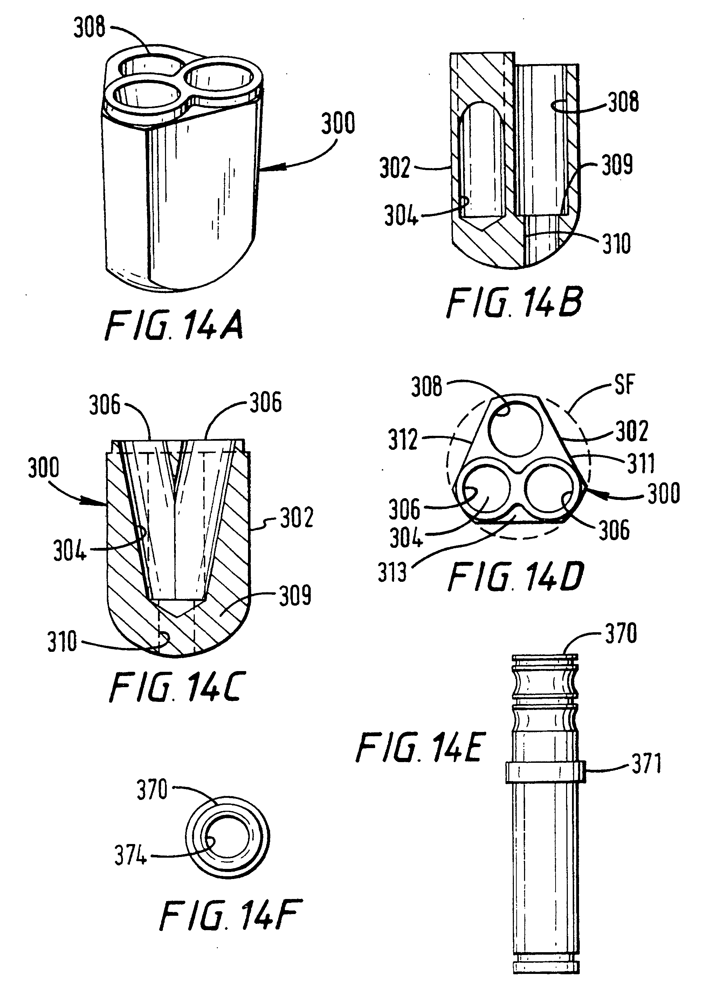

Figs. 14A - 14D show a bottom member 300 according to the present invention that has a body 302 with a heat loop bore 304. Dual heat loop pipe openings 306 are each configured and sized for holding an end of a pipe that forms one side of a heat loop. The heat transfer fluid flows down the pipe of one side of the heat loop, into the bore 304, and then up the pipe of the other side of the heat loop. "Heat Loop" means a heat exchange loop used, e.g. for cooling in the summer and/or heating in the winter.

A coil tubing bore 308 in the body 302 is configured and sized for receiving and holding an end of a string of coil tubing or for receiving and holding an end of a connector (e.g. see Fig. 14F) used to connect coil tubing to the bottom member 300. An end or ledge 309 serves as a stop member against which the lower end of the coil tubing (or of a coil tubing connector) rests.

As shown in Fig. 14A, the body 302 has flattened sides 311, 312, and 313 so that fluid flow is possible between the exterior surfaces of these sides and the interior surface SF of a wellbore (shown in dotted lines in Fig. 14D). Such a configuration of these sides inhibits formation of a fluid hydraulic lock of the bottom member in a wellbore containing fluid.

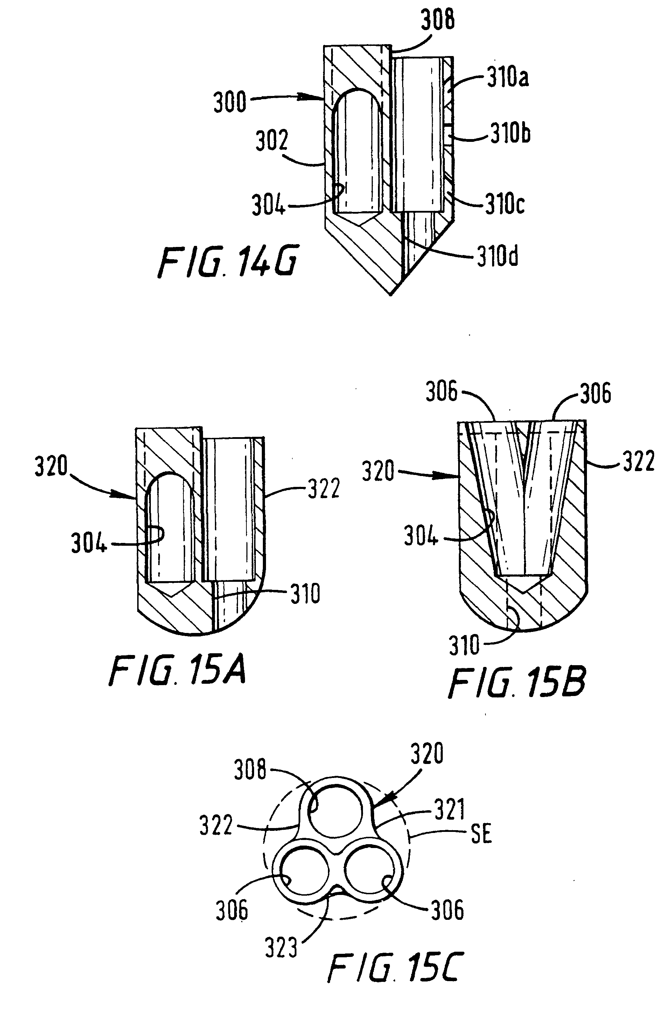

Optionally, the bottom member 300 may have one or more bores 310 in fluid communication with the bore 308. Fluid, e.g. grout, filler material, drilling fluid and/or water, etc., may be selectively pumped through the coil tubing, through the bore 308, and through the bore 310. Optionally, as shown in Fig. 14G, the bottom member 300 (and any bottom member disclosed herein) may have one or more bores 310a, 310b and/or 310c in fluid communication with the bore 308, with or without the bore 310d (which is like the bore 310 described above). It is within the scope of this invention for the bore 310 to be canted from the vertical as viewed in the figures in which it appears. Such additional bore or bores 310a, 310b, and/or 310c can facilitate the entry of the bottom member into an amount of drilling fluid or into an amount of drilling fluid and drilled cuttings; or into an amount of bore filler - when fluid is pumped through them. Fluid, e.g. grout, filler material, drilling fluid and/or water, etc., may be selectively pumped through the coil tubing, through the bore 308, and through the bore 310. As shown in Fig. 14G, the bottom member has a conical bottom nose 15. Alternatively, e.g. as with the bottom members of Figs. 14A and 15A, this nose may be rounded; or, in another aspect, it may have two or more sides that meet along a line forming a point at the bottom of the nose. In one aspect the bottom nose may be an inverted three-sided or four-sided polygonal solid (e.g. a pyramid) with the apex pointing down. With the lower end of the coil tubing secured above the bore 310a, fluid is pumpable out from the or all the bores. Alternatively, if a connector is used as in Fig. 14E, holes can be provided in the connector corresponding in position to the bore(s) so that fluid is flowable through the connector to the bore(s).

Figs. 15A - 15C show a bottom member 320 with a body 322 according to the present invention which is like the bottom member 300, but has sides 321, 322, 323 that are further recessed than the sides 311, 312, 313 of the bottom member 300, providing an even larger fluid flow path past the bottom member between its sides and an interior surface SE of a wellbore. Other parts of the bottom member 320 are like those of the bottom member 300 and the same numerals are used to indicate these parts.
Coil tubing is releasably secured in the bore 308 with a friction fit and/or snap fit and/or glue and heat loop pipe ends can be secured in the openings 306 with epoxy and/or with a heat fusing process. Alternatively, a coil tubing connector 370 (see Figs. 14E - 14F) is releasably held in the bore 308 e.g. with a friction fit and/or snap fit. A ridge 371 on the connector 370 provides a stop member for abutting a top surface of a bottom member. A flow bore 374 extends through the connector 370.

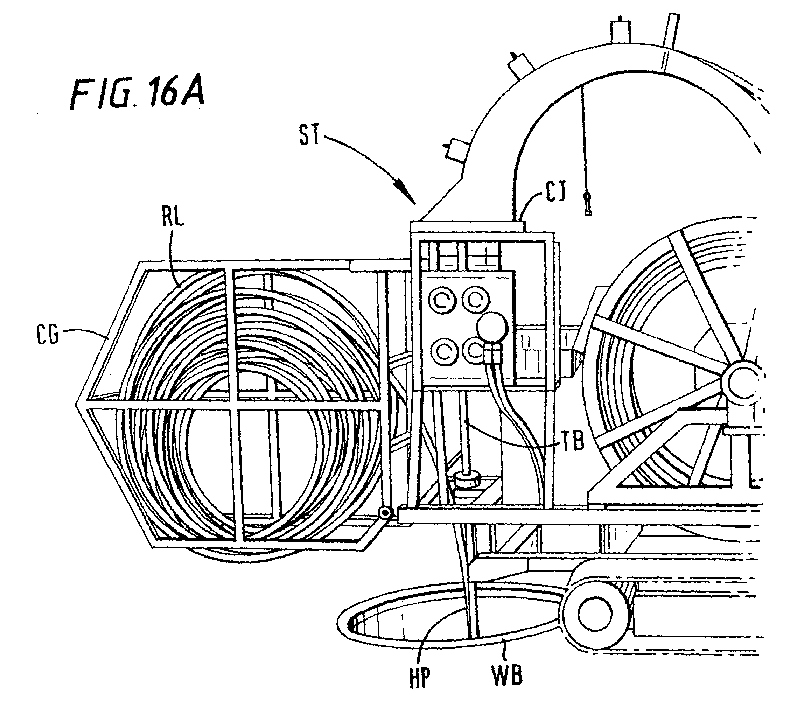

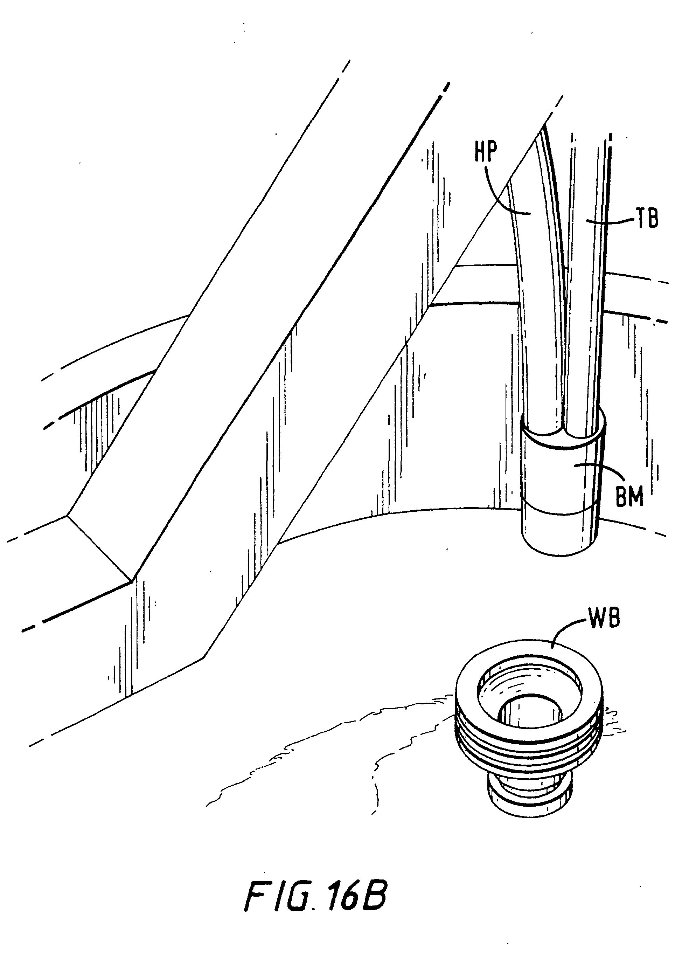

Figs. 16A and 16B show a heat loop installation system ST according to the present invention with a roll of polyethylene heat loop pipes RL in a cage CG and a coil tubing injector CJ injecting coil tubing TB with heat loop pipes HP into a wellbore WB. A bottom member BM has ends of heat loop pipes HP secured therein and an end of the coil tubing CT is also secured thereto. The bottom member BM has internal bores like those of the previously described bottom members. The cage CG can be made, preferably, of aluminum, steel, or plastic.

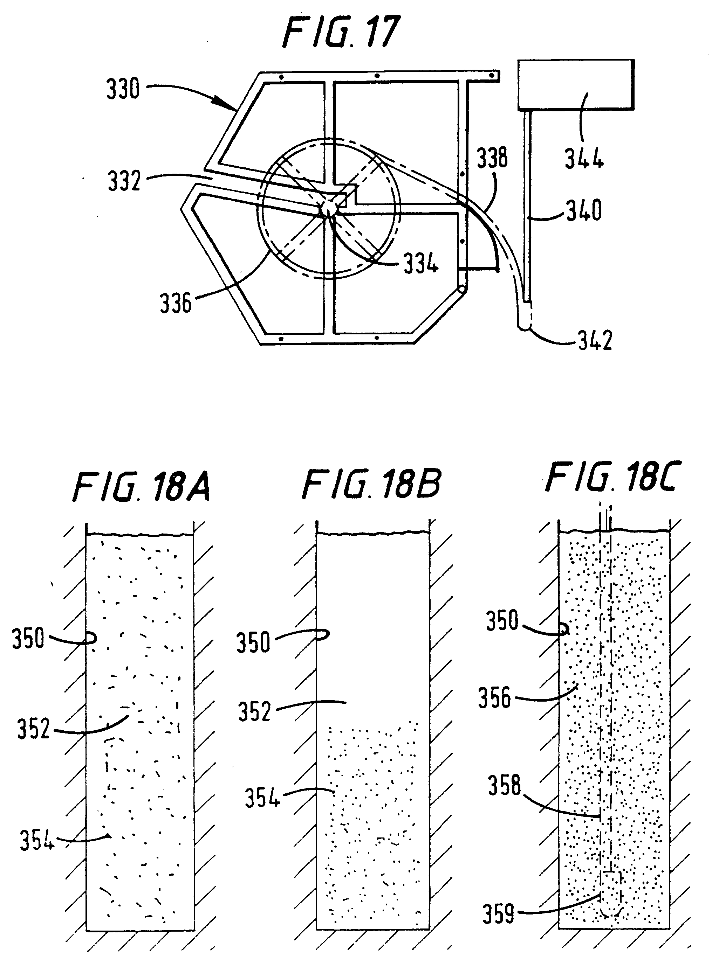

Fig. 17 shows a cage 330 that may be used with the system ST of Fig. 16A instead of the cage CG. The cage 330 has two side grooves 332 (one shown in Fig. 17; the other spaced-apart from and opposite the one shown) which releasably receive and hold projecting ends of an axle 334 of a spool 336 (made, e.g. of steel, aluminum or plastic). Heat loop pipes 338 are wound on the spool 336 and have their lower ends 339 secured in a bottom member 342 (like the previously described bottom members. The heat loop pipes 338 unwind from the spool 336 as coil tubing 340 connected to the bottom member 342 is injected by a coil tubing injection system 344 (shown schematically) into a heat loop wellbore.

Fig. 18A illustrates a heat loop wellbore 350 which contains an amount of drilling fluid 352 which contains some solids 354 (e.g. but not limited to, drilled cuttings and/or drilling fluid solids) 354. As shown in

Fig. 18B, the particles of solids 354 have, over time, settled out and down collecting in a bottom area of the bore 350.

Fig. 18C illustrates the wellbore 350 following injection of a solids-containing polymer-containing filler material 356 according to the present invention into the bore 350 as shown in Fig. 18B. Suspension of the particles of solids 354 is maintained by the material 356. It is also possible for a bottom member (like those of Figs. 14A, 15A) to jet down through the collected settled out material (Fig. 18B) to position the bottom member near the bottom of the bore 350 and then filler material 356 can be pumped into the bore 350 as the coil tubing initially connected to the bottom member is disconnected and raised, all the while pumping material 356 into the bore 350 and mixing it with the material 354. In one aspect, as shown in Fig. 18C, a heat loop system 358 (shown in dotted lines) with a bottom member 359 (as any disclosed herein but preferably with one or more fluid ports for jetting out fluid) is left in the bore 350.

## Claims

1. A method of constructing an underground heat exchanger, which method comprises the steps of:
(1) constructing a wellbore;
(2) lowering a heat loop (358) into said wellbore (350); and
(3) backfilling the space between said heat loop (358) and said wellbore (350) with a filler material (356) comprising a thermally conductive solid (354) and water, which filler material (358) is liable to bridging and channelling in said space, **characterised by** the step of adding a gel to said filler material to inhibit said bridging and channelling.

2. A method as claimed in Claim 1, wherein the thermally conductive solid (354) is suspended in and dispersed homogeneously throughout the gel.

3. A method as claimed in Claim 1 or 2, wherein the gel is a polymer and the polymer, water, and thermally conductive solid (354) are present, by weight, in the ranges of
| | |
|---|---|
| Polymer | about 0.3% to about 5% |
| Water | about 25% to about 50% |
| Solids | about 50% to about 80%. |

4. A method as claimed in any of Claims 1 to 3, wherein the filler material (356) has a thermal conductivity of at least 1.4.

5. A method as claimed in Claim 3 or 4, wherein the polymer is a rehydrateable polymer.

6. A method as claimed in any of Claims 1 to 5, wherein said heat loop comprises a bottom member (300; 320), which bottom member comprises
a body (302; 322),
a first bore (304) through the body extending from a first opening (306) of the body to a second opening (306) of the body, the first opening and the second opening each sized and configured for receipt therein of a respective heat loop pipe,
a second bore (308) having at least one opening on the body (302; 322), the second bore (308) sized and configured for mounting said body on an end of coil tubing.

7. A method as claimed in Claim 6, further comprising at least one fluid exit port (310) in fluid communication with the second bore (308).

8. A method as claimed in Claim 6 or 7, further comprising coil tubing releasably secured to said bottom member.

9. A method as claimed in Claim 7, wherein the step of lowering said heat loop into said wellbore is performed by urging said bottom member (302; 320) into said wellbore with said coil tubing.

10. A method as claimed in Claim 9, further comprising the steps of releasing said coil tubing from said bottom member (300; 320) and backfilling the space between said heat loop and said wellbore with said filler material through said coil tubing.

11. A filler material (356) for use in a method as claimed in any preceding Claim, which filler material (356) comprises a thermally conductive solid (354) and water, which filler material (358) is liable to bridging and channelling in said space, **characterised by** a gel to inhibit said bridging and channelling.

12. A filler material as claimed in Claim 11, wherein the thermally conductive solid (354) is suspended in and dispersed homogeneously throughout the gel.

13. A filler material as claimed in 11 or 12, wherein the gel is a polymer and the polymer, water, and thermally conductive solid are present, by weight, in the ranges of
| | |
|---|---|
| Polymer | about 0.3% to about 5% |
| Water | about 25% to about 50% |
| Solids | about 50% to about 80%. |

14. A filler material as claimed in Claim 11, 12 or 13, wherein the filler material has a thermal conductivity of at least 1.4.

15. A filler material as claimed in Claim 13 or 14, wherein the polymer is a rehydrateable polymer.

16. An underground heat exchanger is embedded in a filler material as claimed in any of Claims 11 to 15.

## Patentansprüche

1. Verfahren zur Errichtung eines unterirdischen Wärmeaustauschers, wobei das Verfahren die Schritte umfaßt:
(1) Einrichten eines Bohrlochs,
(2) Absenken einer Wärmeschleife (358) in das Bohrloch (350) und
(3) Auffüllen des Raums zwischen der Wärmeschleife (358) und dem Bohrloch (350) mit einem Füllmaterial (356), das einen wärmeleitenden Feststoff (354) und Wasser umfaßt, wobei das Füllmaterial (358) für das Überbrücken und die Kanalbildung in diesem Raum anfällig ist,
kennzeichnet durch den Schritt der Zugabe eines Gels zu diesem Füllmaterial, damit das Überbrücken und die Kanalbildung gehemmt werden.

2. Verfahren nach Anspruch 1, wobei der wärmeleitende Feststoff (354) im Gel suspendiert und überall homogen darin dispergiert ist.

3. Verfahren nach Anspruch 1 oder 2, wobei das Gel ein Polymer ist und das Polymer, Wasser und der wärmeleitfähige Feststoff (354), auf das Gewicht bezogen, in folgenden Bereichen vorhanden sind:
| | |
|---|---|
| Polymer | etwa 0,3 % bis etwa 5 % |
| Wasser | etwa 25 % bis etwa 50 % |
| Feststoff | etwa 50 % bis etwa 80 %. |

4. Verfahren nach einem der Ansprüche 1 bis 3, wobei das Füllmaterial (356) eine Wärmeleitfähigkeit von mindestens 1,4 aufweist.

5. Verfahren nach Anspruch 3 oder 4, wobei das Polymer ein wiederbefeuchtbares Polymer ist.

6. Verfahren nach einem der Ansprüche 1 bis 5, wobei die Wärmeschleife ein unteres Teil (300, 320) aufweist, wobei dieses untere Teil umfaßt:
einen Körper (302, 322),
eine erste Bohrung (304) durch den Körper, die von einer ersten Öffnung (306) des Körpers zu einer zweiten Öffnung (306) des Körpers verläuft, wobei die erste Öffnung und die zweite Öffnung jeweils so bemessen und gestaltet sind, daß sie darin die entsprechende Wärmeschleife aufnehmen,
eine zweite Bohrung (308) mit mindestens einer Öffnung auf dem Körper (302, 322), wobei die zweite Bohrung (308) so bemessen und gestaltet ist, daß der Körper auf einem Ende der Rohrschlange befestigt werden kann.

7. Verfahren nach Anspruch 6, das außerdem mindestens eine Fluidaustrittsöffnung (310) in Fluidverbindung mit der zweiten Bohrung (308) umfaßt.

8. Verfahren nach Anspruch 6 oder 7, das außerdem eine Rohrschlange umfaßt, die lösbar am unteren Teil angebracht ist.

9. Verfahren nach Anspruch 7, wobei der Schritt des Absenkens der Wärmeschleife in das Bohrloch durchgeführt wird, indem das untere Teil (302, 320) mit der Rohrschlange in das Bohrloch gedrückt wird.

10. Verfahren nach Anspruch 9, das außerdem die Schritte des Herauslösens der Rohrschlange aus dem unteren Teil (300, 320) und des Auffüllens des Raums zwischen der Wärmeschleife und dem Bohrloch mit Füllmaterial durch die Rohrschlange umfaßt.

11. Füllmaterial (356) für die Verwendung in einem Verfahren nach einem der vorstehenden Ansprüche, wobei das Füllmaterial (356) einen wärmeleitfähigen Feststoff (354) und Wasser umfaßt, wobei das Füllmaterial (358) für die Überbrückung und Kanalbildung in diesem Raum anfällig ist, **gekennzeichnet durch** ein Gel, um das Überbrücken und die Kanalbildung zu unterdrücken.

12. Füllmaterial nach Anspruch 11, wobei der wärmeleitfähige Feststoff (354) im Gel suspendiert und überall homogen darin dispergiert ist.

13. Füllmaterial nach Anspruch 11 oder 12, wobei das Gel ein Polymer ist und das Polymer, Wasser und der wärmeleitfähige Feststoff, auf das Gewicht bezogen, in folgenden Bereichen vorhanden sind:
| | |
|---|---|
| Polymer | etwa 0,3 % bis etwa 5 % |
| Wasser | etwa 25 % bis etwa 50 % |
| Feststoff | etwa 50 % bis etwa 80 % |

14. Füllmaterial nach Anspruch 11, 12 oder 13, wobei das Füllmaterial eine Wärmeleitfähigkeit von mindestens 1,4 hat.

15. Füllmaterial nach Anspruch 13 oder 14, wobei das Polymer ein wiederbefeuchtbares Polymer ist.

16. Unterirdischer Wärmeaustauscher, der in einem Füllmaterial nach einem der Ansprüche 11 bis 15 eingebettet ist.

## Revendications

1. Procédé de construction d'un échangeur thermique souterrain, procédé qui comporte les étapes consistant à :
(1) construire un puits de sondage ;
(2) descendre un circuit thermique (358) dans ledit puits de sondage (350) ; et
(3) remplir l'espace compris entre ledit circuit thermique (358) et ledit puits de sondage (350) avec un matériau de remplissage (356) comprenant un solide thermiquement conducteur (354) et de l'eau, lequel matériau de remplissage (358) est susceptible de former un pont et un canal dans ledit espace, **caractérisé par** l'étape consistant à ajouter un gel audit matériau de remplissage pour empêcher ladite formation de pont et de canal.

2. Procédé selon la revendication 1, dans lequel le solide thermiquement conducteur (354) se trouve en suspension et est dispersé de façon homogène dans tout le gel.

3. Procédé selon la revendication 1 ou 2, dans lequel le gel est un polymère et le polymère, l'eau, et le solide thermiquement conducteur (354) sont présents, dans des teneurs en poids de :
| | |
|---|---|
| Polymère | de 3% environ à 5% environ |
| Eau | de 25% environ à 50% environ |
| Solide | de 50% environ à 80% environ. |

4. Procédé selon l'une quelconque des revendications 1 à 3, dans lequel le matériau de remplissage (356) présente une conductivité thermique d'au moins 1,4.

5. Procédé selon la revendication 3 ou 4, dans lequel le polymère est un polymère réhydratable.

6. Procédé selon l'une quelconque des revendications 1 à 5, dans lequel le circuit thermique comprend un élément de fond (300 ; 320), lequel élément de fond comporte :
un corps (302 ; 322)
un premier alésage (304) à travers le corps s'étendant d'une première ouverture (306) du corps à une seconde ouverture (306) du corps, la première ouverture et la seconde ouverture étant, chacune, dimensionnée et configurée pour y recevoir un conduit respectif de circuit thermique,
un second alésage (308) comportant au moins une ouverture sur le corps (302, 322), le second alésage (308) étant dimensionné et configuré pour monter ledit corps sur une extrémité d'un tubage en bobine.

7. Procédé selon la revendication 6, comprenant, de plus, au moins un orifice de sortie de fluide (310) en communication de fluide avec le second alésage (308).

8. Procédé selon la revendication 6 ou 7, comprenant, de plus, un tubage en bobine fixé de façon libérable audit élément de fond.

9. Procédé selon la revendication 7, dans lequel l'étape consistant à descendre ledit circuit thermique dans ledit puits de sondage est exécutée en poussant ledit élément de fond (32 ; 320) dans ledit puits de sondage avec ledit tubage en bobine.

10. Procédé selon la revendication 9, comprenant, de plus, les étapes consistant à libérer ledit tubage en bobine dudit élément de fond (300 ; 320) et à remplir l'espace compris entre ledit circuit thermique et ledit puits de sondage avec ledit matériau de remplissage à travers ledit tubage en bobine.

11. Matériau de remplissage (356) à utiliser dans le procédé selon l'une quelconque des revendications précédentes, lequel matériau de remplissage (356) comprend un solide thermiquement conducteur (354) et de l'eau, matériau de remplissage (358) qui est susceptible de former des ponts et des canaux dans ledit espace, **caractérisé par** un gel pour empêcher ladite formation de ponts et de canaux.

12. Matériau de remplissage selon la revendication 11, dans lequel le solide thermiquement conducteur (354) est en suspension et est dispersé de façon homogène à travers tout le gel.

13. Matériau de remplissage selon la revendication 11 ou 12, dans lequel le gel est un polymère et le polymère, l'eau et le solide thermiquement conducteur se trouvent présents , dans des teneurs en poids de :
| | |
|---|---|
| Polymère | de 3% environ à 5% environ |
| Eau | de 25% environ à 50% environ |
| Solide | de 50% environ à 80% environ. |

14. Matériau de remplissage selon la revendication 11, 12, ou 13, dans lequel le matériau de remplissage présente une conductivité thermique d'au moins 1,4.

15. Matériau de remplissage selon la revendication 13 ou 14, dans lequel le polymère est un polymère réhydratable.

16. Echangeur thermique souterrain noyé dans un matériau de remplissage selon l'une quelconque des revendications 11 à 15.
